# EUROPEAN PATENT APPLICATION

(11) **EP 0 884 908 A2**
(43) Date of publication of application: **16.12.1998**
(21) Application number: 98440122.4
(22) Date of filing: 08.06.1998
(51) Int. Cl.: H04N 7/173

(54) **Terminal apparatus for storing and reproducing video signals for a high definition movie distribution service**

(30) Priority: 10.06.1997 IT MI971358
(71) Applicant: ALCATEL ALSTHOM COMPAGNIE GENERALE D'ELECTRICITE, 75008 Paris (FR)
(72) Inventor: Alati, Andrea, 00151 Roma (IT); Zugno, Claudio, 22073 Fino Mornasco (Como) (IT); Parladori, Giorgio, 37122 Verona (IT)
(74) Representative: Schätzle, Albin, Dipl.-Phys.

(57) **Abstract**

A terminal apparatus is described for storing and reproducing video signal sequences for a high definition movie distribution service interfacing with the telecommunication network so as to receive, inter alia, the PDH, SDH and ATM protocols, and as to control and decode the different profiles and levels of the MPEG standard.

The terminal carries out the local reproduction and a local storage of the video signal in order to allow the retransmission even off-line and also at a different rate from the received signal one, and further it carries out the transmission error detection and correction.

The terminal storage can contain several films thus allowing the local choice of the most suitable projection at selected times and dates (Fig. 1).

## Description

The present invention is directed to the field of video signal processing, and more specifically to a terminal apparatus for storing and reproducing video signal sequences for a high definition movie distribution service.

The invention concerns an apparatus designed to store, on supports derived from computer technology, data flows from telecommunication systems (e.g. satellites or ground networks) whose contents includes inter alia celluloid film support pictures, previously coded in digital format, and/or pictures from telecameras and digital coding systems associated therewith.

The apparatus further includes the capability of real-time decoding said flows stored or coming from the transmission line and, through the local processing capability, it further allows the adaptation of the received format to the display conditions.

The conventional movie distribution system provides for the realization of a limited number of copies reserved to distribution taking place at first in the theaters of the main cities and afterwards in the theaters of other cities. The so realized copies have a limited duration with a degradation in the image quality directly linked to the number of screenings which the film is subjected to, jeopardizing in some circumstances the subsequent showings to the detriment of the film chip. Moreover, the conventional film distribution system has a serious drawback since the film is easily exposed to piracy.

In order to in increase the audience's interest in the movie and reduce the management costs of the motion picture theaters, the concept of multi-hall has been introduced some time ago, whereby the motion picture theaters, having room for some hundreds of people, have been subdivided into houses having for some tenths of cinema-goers and where different films can be screened at the same time. Within this ambit, the entertainment world is developing the multi-service centers: houses are combined with business centers to offer a more and more diversified range of services.

The need to centralize the simultaneous management of several houses becomes more and more stringent and fulfills the requirements that allow a better employment of human resources and a more expedite coordination in the scheduling of the halls which can be used as reference points for attending cultural programmes in video-conference, launching new products, telelearning, and so on.

To cope with the above problems, digital encoding and transmission technology is today capable of making available on the market high resolution moving image processing and production systems which, combined with satellite telecommunication systems, from a valid means for realizing high definition television (HDTV) image distribution services featuring high quality for professional applications. In particular, the application relative to telemovie or "coming movie", where the celluloid films and cine-projectors are replaced by electronic equipment, capable of storing hours of coded digital films and to reproduce pictures on wide movie screens.

Experiments related to movie distribution to halls located in Europe and U.S.A. based on the use of satellite and cable connection systems are known in the art. In particular, an HDTV movie distribution network with fiber optic digital transmission has been realized in the United States at ten experimental points. In the meanwhile, live distribution of events via satellite to city halls through dedicated analog techniques is under experiment in France. None of these two video distribution techniques can be considered as implementing a satellite movie distribution network capable of solving in a comprehensive and exhaustive manner all the above mentioned problems arising from the conventional distribution film technique.

Therefore, it is an object of the present invention to overcome all the aforesaid drawbacks and to indicate an apparatus adapted to store, on means derived from computer technology, data flows from telecommunication systems (e.g. satellites or ground networks), whose contents include, inter alia, celluloid film support pictures previously coded in digital formats, and/or images from telecameras having digital coding systems associated therewith.

The terminal apparatus interfaces with the telecommunication network in such a way as to receive, inter alia, PDH, SDH, ATM protocols, as specified in the relevant ETSI, ITU-T rules, so as to control and decode the different profiles and levels defined by the MPEG standard (ISO-IEC/JTC1/SC29/WGII). Such an apparatus is also designed to transfer, with protection through suitable data correction and/or retransmission algorithms, video sequences to one or more similar peripheral systems. The local reproduction of the film clips over each periphery is controlled from the center as to both number and quality of screenings.

The invention allows, when using a satellite transmission network, for sending encoded films only to peripheral systems enabled by access codes.

Inserted by the apparatus, on each projected image, is a recognition code, different for each projection screen, not visible by the viewer but that can be decoded only through still-image systems. The transmitted data, encrypted at the outset, are thus stored in a protected from and decrypted only at the time of projection. Moreover, the recognition code, once decoded, indicates the location where the unlicensed recording (directly from the screen) took place and it identifies who allowed the unauthorized film reprinting.

The suitably dimensional terminal apparatus is able to contain several film chips thus allowing the most suitable projection at selected dates and hours.

By means of the present invention, the transmission systems are optimized for events that can be displayed at deferred times and for a number of times as occurs in the projection, in a multi-use concept.

The terminal carries out a local storage of the video signal to allow the retransmission even off-line and also at a rate which is different from the received signal rate, and it further carries out the transmission error detection and correction.

Through a second interface apparatus to a lower capacity data network, the terminal "converses" with an operating center to control the outcome of the film transmission in order to eventually send again the errorred parts only. Moreover, in case of a network with a plurality of peripheral units, the central system is able to monitor all the peripheral terminals, to send messages addressed to some terminals only, and to transfer telecommands to apparatus connected in the periphery.

In order to achieve these objectives, the present invention concerns a terminal apparatus for storing and reproducing films for a high definition movie distribution service, as set forth in claim 1.

Further embodiments of the present invention are set forth in the dependent claims.

The terminal apparatus of the invention has countless advantages.

In a preferred embodiment thereof, the terminal apparatus is able to receive a digital signal with a bit rate of 34-45 Mbit/s, coming from the satellite system ITALSAT, operating in the Ka band.

Further objects and advantages of the present invention shall result in being clear from the following detailed description of an embodiment thereof and from the accompanying drawings attached merely by way of a non limiting example in which:
- Fig. 1 shows a functional block diagram of the terminal in accordance with the present invention;
- Fig. 2 shows a more detailed functional diagram of the labeled block ATM in Fig. 1;
- Fig. 3 shows a more detailed functional diagram of the block labeled DEMUX in Fig. 1;
- Fig. 4 shows a more detailed functional diagram of the block labeled TVDEC in Fig. 1;
- Fig. 5 shows a more detailed functional diagram of the block labeled HDSDD in Fig. 4;
- Fig. 6, 7 and 8 are flow charts of the operations carried out by the control unit labeled CNTRL in Fig. 1.

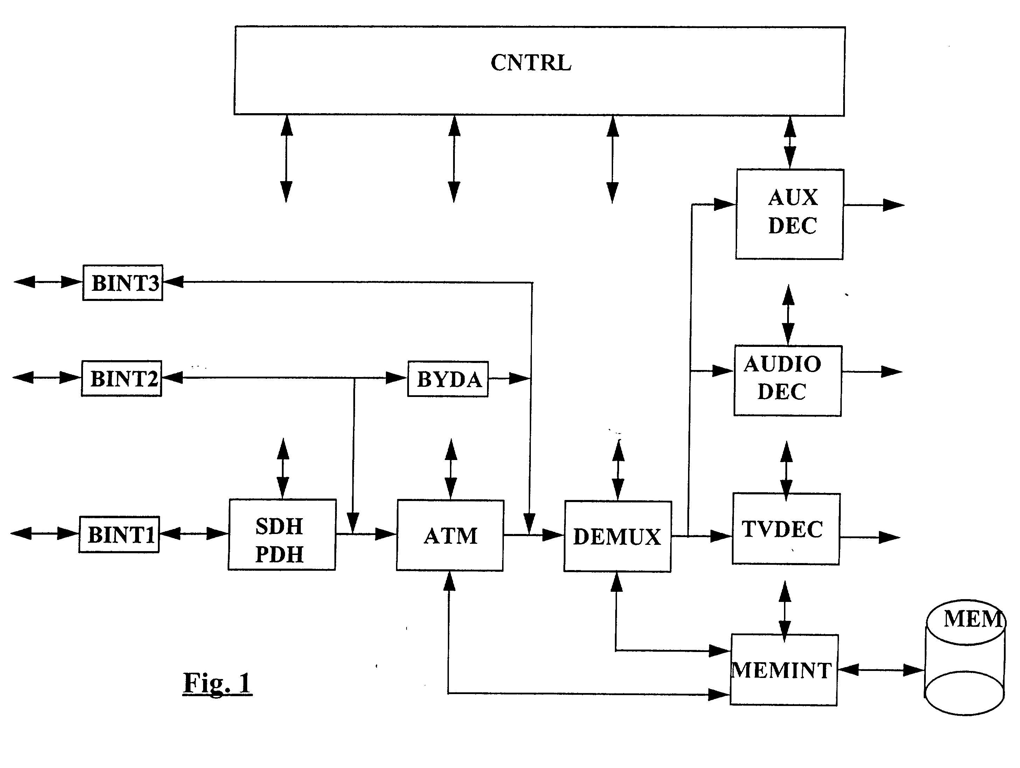

The functional block diagram of the terminal is shown in Fig. 1.

The terminal apparatus interfaces with the telecommunication network in such a way to receive, inter alia, PDH, SDH, ATM digital signal. The terminal apparatus controls and decodes, inter alia, the different profiles and levels defined by the MPEG standard.

The physical and logical (protocols) levels of the PDH, SHD and ATM digital signals are known from, and described in, the following recommendations: Physical levels:
1a: PDH: ITU-T G703
1b: SDH: ITU-T G703; ITU-T G957; ITU-T G958
1c: ATM: ATM Forum TC "UTOPIA"
Logical Levels:
2a: PDH: ITU-T G704; ITU-T G751
2b: SDH: ITU-T G707 to 709; G781 to 784: G832
2c: ATM: ITU-T 1361 to 363;432; GIU; 731; 732;ITU-T G804;

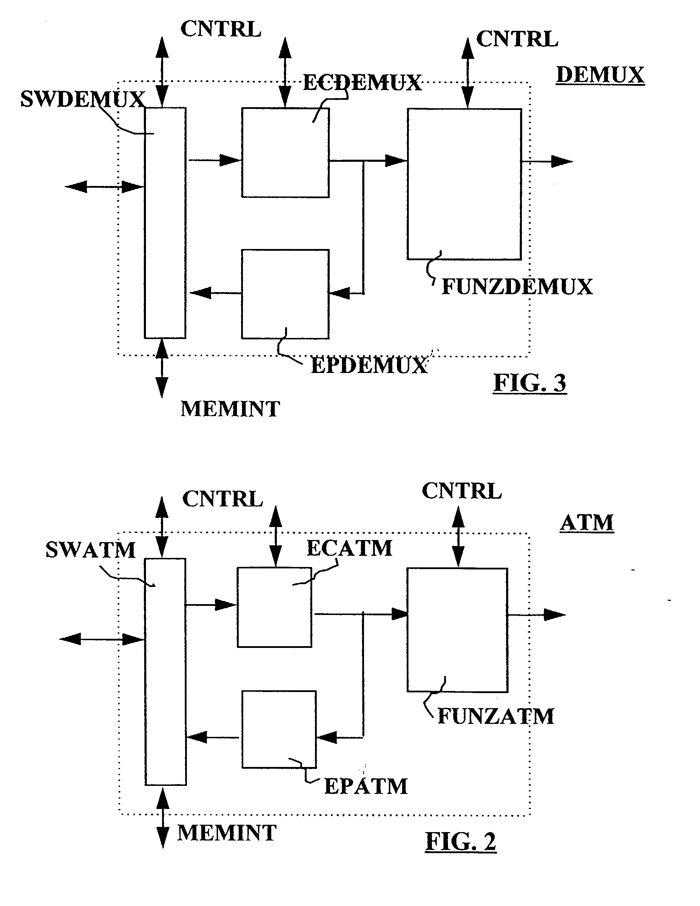

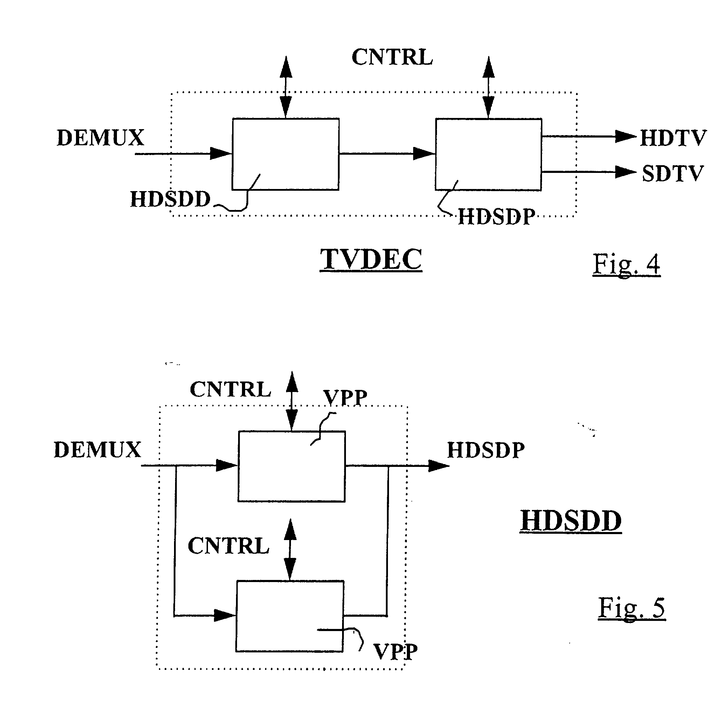

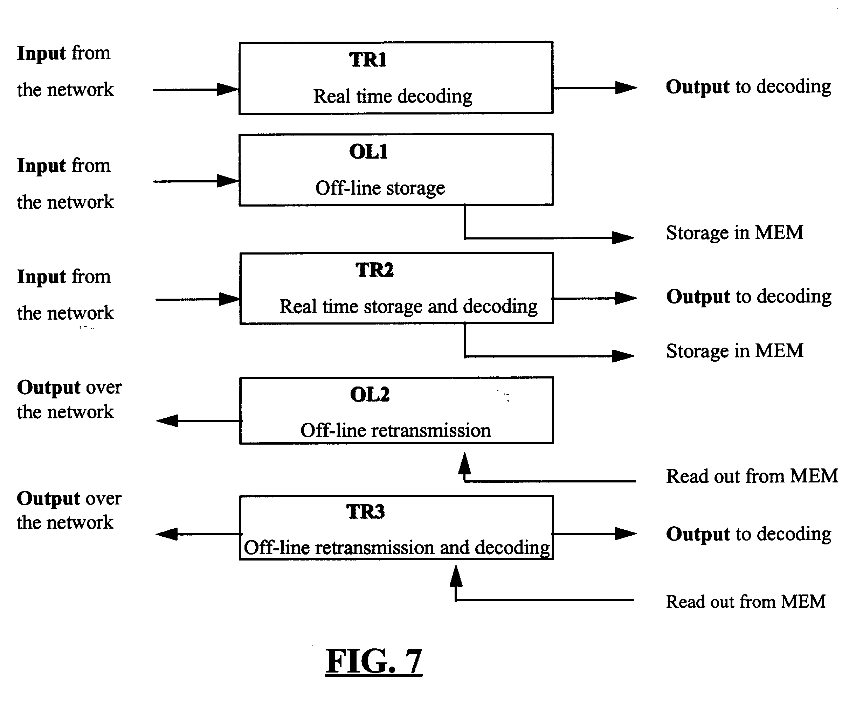

The MPEG standard is known from, and described in, the following recommendations: IS-13818 - Series (MPEG2) IS 11172 - Series (MPEG1) To this aim, the terminal is composed of the following functional blocks:
- BINT 1: physical bidirectional interface for SDH or PDH line signal in accordance with the above recommendations 1a, 1b. - BINT 1 receives SDH or PDH digital signals and transfer them to block SDH/PDH. It allows a retransmission of the received signal according to a physical layer similar to the received one.
- SDH/PDH: this block carries out known functionalities by receiving SDH or PDH digital signals from the bidirectional interface BINT 1, locking the transmission clock of said signals and the frequencies of data structures in which the communication protocols of these signals are contained. It interprets the control signals contained in said protocols and communicates them to block CNTRL. It outputs a digital signal whose format is equal to the one which could be provided by BINT 2, i.e. compatible with block ATM whose physical level is specified in accordance with the above recommendation 1c and the logic level in accordance with the above recommendation 2c. SDH/PDH is controlled by CNTRL (described later on) which able to carry out its programming, its operative configuration according to the selected program and the real-time monitoring of alarms.
- BINT 2: bidirectional physical interface for ATM line-signals in accordance with the above recommendation 2c and 1c. BINT 2 receives ATM digital signals from the line and transfers them to block ATM. It allows a retransmission of the received signal in accordance with a physical level similar to the received one.
- ATM: this block substantially carries out the function of ATM line-signal processing and is composed of the following blocks, originated in a new fashion, as depicted in Fig. 2:
- SWATM (switch): it allows the simple unidirectional interfacing between the output of block SDH/PDH and sub-block ECATM. It bidirectionally handles the data input/output between BINT 2, sub-block ECATM, EPATM and block MEMINT. In particular, the following interfacing are possible:
   a1) BINT 2 or SDH/PDH data sources are connected to ECATM whilst EPATM data source is connected to MEMINT data receiver (see also Fig. 7, blocks TR 1, TR 2, OL 1 described later on).
   a2) MEMINT data source is connected to BINT 2 data receiver, and to ECATM (see also Fig. 7, blocks TR 3, OL 2 described later on).
- ECATM carries out the Error Correction function. By applying known techniques it allows the carrying out of corrections on the received signal structured in the form of data packets, and whenever the quality of the corrected signal is not enough, it provides block CNTRL with information on the corrupted data packet. It receives incoming data from sub-block SWATM. It outputs data to sub-block FUNZATM.
- EPATM carries out the Error Protection function. By applying known techniques, it inserts, in the signal coming from ECATM signal protection codes from transmission errors. It receives data from ECATM and, in the a1) operation mode, it provides data to MEMINT.
- FUNZATM carries out known ATM signal processing functionalities in accordance with the above recommendation at 2c. It receives ATM signals from sub-block ECATM, locks the transmission clock of said signals and the frequencies of data structures in which the communication protocols of said signals are contained, interprets the control signals contained in said protocols and communicates them to block CNTRL. It outputs a digital signal, adapted to video service, in a format which is equal to the one that could be provided by BINT 3, i.e. compatible with block DEMUX whose physical level is specified in accordance with recommendation DVB TM 1449 and the logic one is specified in accordance with recommendations IS-13818-1 (MPEG 2) and IS-11172-1 (MPEG 1)
- FUNZATM is controlled by CNTRL which is able to carry out its programming, its operative configuration according to the selected program and the real-time monitoring of the alarms.
- Turning back to Fig. 1, BYDA: receives data from block SDH/PDH and allows for carrying out a bypass of the block ATM, should this function be not required, and of adapting the BINT 2 interface format to the BINT 3 one. It provides data to block DEMUX. The block is controlled by CNTRL which is able to carry out its programming and its operative configuration.
- BINT 3: bidirectional physical interface for transport multiplexed line signals in accordance with recommendation DVBTM 1449. It receives transport multiplexed signals from the line and transfers them to block DEMUX. It allows a retransmision of the received signal in accordance with a physical level similar to the received one.
- DEMUX: this block substantially carries out the demultiplexing function of the signal that it receives at its input, and it is composed of the following blocks, organized in a new fashion, as depicted in Fig. 3:
- SWDEMUX (switch): it carries out the simple unidirectional interfacing between the output of blocks SDH/PDH or BYDA and the sub-block ECDEMUX. It bidirectionally handles the data input/output between BINT 3 and the sub-blocks ECDEMUX, EPDEMUX and block MEMINT. In particular, the following interfacing modes are possible:
   b1) BINT 3, data source, is connected to ECDEMUX and EPDEMUX, data source is connected to MEMINT, data receiver (see also Fig. 7, blocks TR 1, TR 2, OL 1, later on described);
   b2) data source MEMINT is connected to data receiver BINT 3 and to ECDEMUX (see also Fig. 7, blocks TR 3, OL 2 later on described);
- ECDEMUX carries out the Error Correction function. By applying known techniques, it allows for carrying out corrections on the received signals, structured as data packets, and should the corrected signal quality be insufficient, it provides block CNTRL with information about the corrupt packet. It receives input signals from sub-block SWDEMUX. It provides output data to sub-block EPDEMUX and to sub-block FUNZDEMUX.
- EPDEMUX: carries out the Error Protection function. By applying known techniques it inserts, in the signal coming from ECDEMUX, signal protection for transmission errors codes. It receives data from ECDEMUX and in the operation mode b1 transmits data to MEMINT.
- FUNZDEMUX: carries out known demultiplexing functions of the MPEG signal, in its different versions (MPEG 1, MPEG 2) according to recomendations IS-13818-1 and IS-11172-1. It receives transport multiplexed signals from sub-block ECDEMUX, it locks the reference clocks of said signals and the frequencies of the data structures containing the communication protocols of these signals, it interprets the control signals contained in said protocols and communicates them to block CNTRL. It outputs demultiplexed digital signals for blocks AUXDEC, AUDIODEC, TVDEC. FUNZDEMUX is controlled by CNTRL which can carry out its programming, its operative configuration according to the selected program and the real-time monitoring of the alarms.
- Turning back to Fig. 1, TVDEC: by applying known techniques, in accordance with recommendations IS-13818-3 and IS-11172-3, it allows the MPEG decoding and interfacing with the display of HDTV signals and conventional SDTV signals.

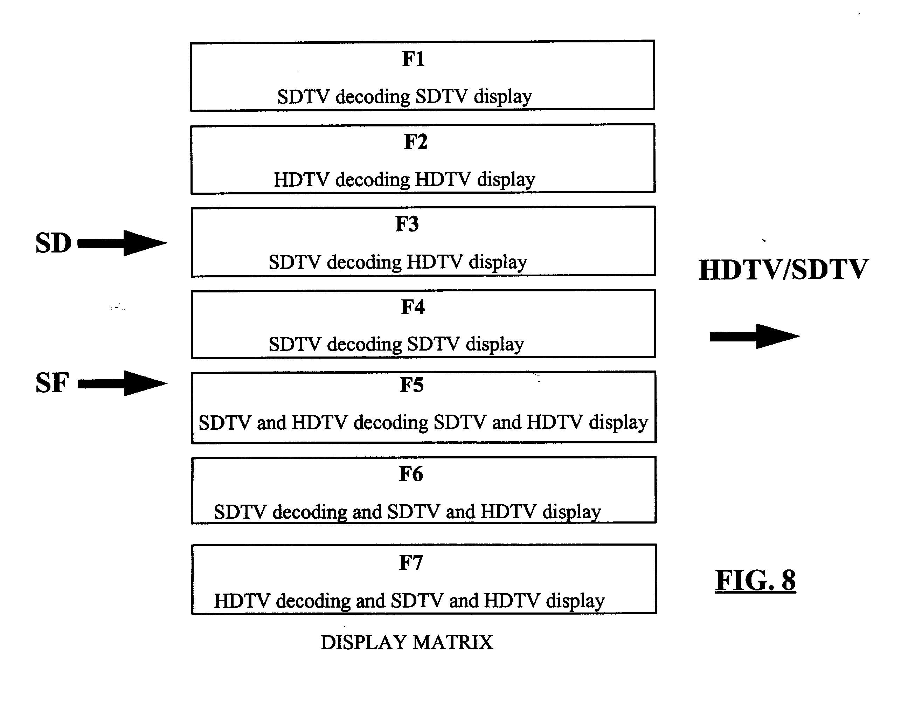

It is composed of the following two sub-blocks, as depicted in Fig. 4:
- HDSDD (High Definition Standard Definition Decoding): in this sub-block the decoded HDTV and SDTV video signals coming from block DEMUX are decoded. The decoding can be applied to one signal at a time or both. In the latter circumstance, block EMUX shall provide information necessary for decoding both HDTV and SDTV signals (see also the functional description of Fig. 8, F1 - F7 states).

Fig. 5 shows a possible implementation diagram of the video decoder HDSDD, composed e.g. of one or more multiprocessor platform VPP, each of them being e.g. implemented in accordance with the description of the prior Italian Patent Application MI96A000867 filed on May 3, 1996 in the name of ALCATEL ITALIA S.p.A., wherein a multiprocessor system is described as comprising:
- at least two microprocessors;
- at least one first device shareable and accessible by said microprocessor;
- a buffer connected with each of said microprocessors, each buffer being connected to said first device;
- means, connected with each of said microprocessors, for selecting the devices connected to each of said microprocessors;
- decision means, for enabling the access of said microprocessors to said first device.

Turning back to Fig. 4, HDSDP (High Definition Standard Definition Postprocessing): receives the HDSDD output signal and carries out a postprocessing on the decoded signal by applying noise filtering techniques or format changes. In the latter circumstance, for instance, an SDTV signal can be transferred into an HDTV one and viceversa.

Further HDSDP performs the so-called water-marking function, i.e. the function of inserting an electronic signature to detect unauthorized reproducing and use of the video signal. Inserted on every projected image is a recognition code, different for each screen, not visible by the viewer but decipherable through still image systems only. The transmitted date, encrypted at the outset, are thus stored in a protected form and decrypted only at the time of projection. Moreover, the recognition code, once decoded, indicates the location where the unlicensed recording(directly from the screen) took place and it identifies who allowed the unlicensed film reprinting. In the case where a satellite transmission network is used, it is thus permitted of addressing the encoded films duly to peripheral systems enabled by access codes. The output of HDSDP feeds the display in the SDTV and/or HDTV formats.
- TVDEC is controlled by CNTRL that is able to carry out its programming , its operative configuration according to the selected program and the real-time monitoring of the alarms.

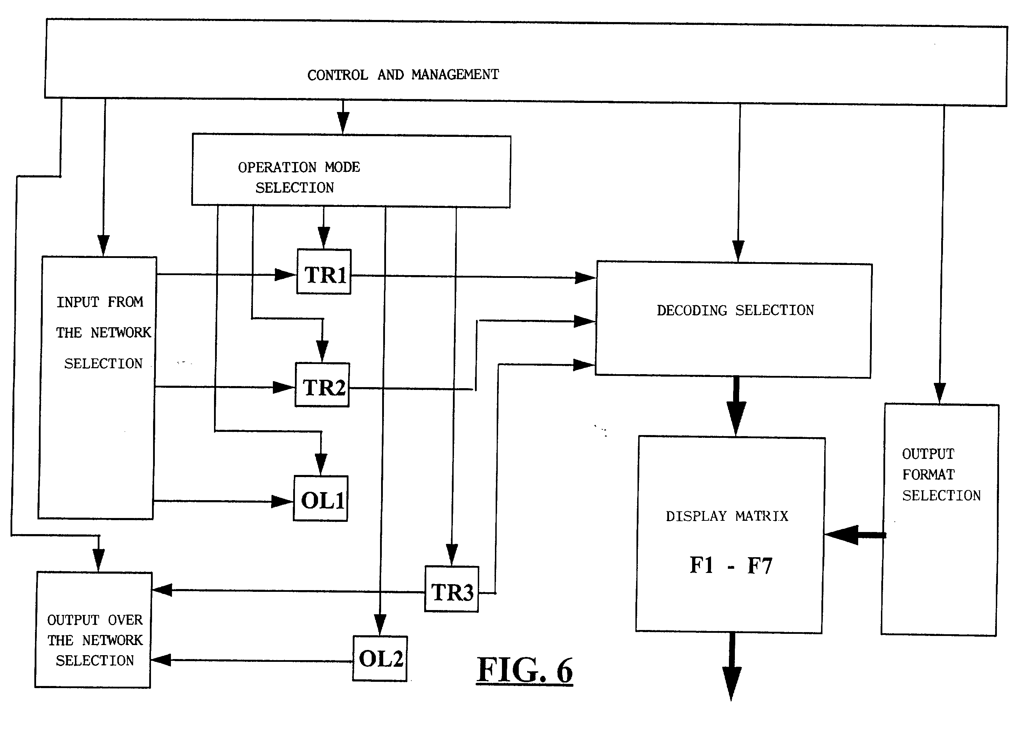

Turning back to Fig. 1, AUDIODEC: by applying known techniques, in accordance with recommendation IS-13818-2 and IS-11172-2, it allows the MPEG audio decoding and the interfacing with the audio signal reproduction equipment.
- AUDIODEC is controlled by CNTRL that is able to carry out its programming, its operative configuration in the selected program and the real-time monitoring of the alarms.
- AUXDEC: by applying known techniques, it allows the decoding of the auxiliary signals necessary to suitably manage the video services. The block is controlled by CNTRL that is able to carry out its programming, its operative configuration according to the selected program and the real-time monitoring of the alarms.
- MEMINT: interfacing unit with the local memory MEM which, along with CNTRL, allows the terminal to operate both as a local decoder for HDTV set-top box television signal, and as a professional interactive receiver. It receives at its input signals from sub-blocks EPATM of block ATM or from sub-block EPDEMUX of block DEMUX. It outputs a signal for the storage unit. Interface MEMINT allows the original use of the terminal for the following functionalities, also described later on with reference to Figs. 6, 7, 8:
   1) Receiving through the network different TV programs in the HDTV and/or SDTV formats and store them also at a different rate from the original one;
   2) Retransmitting through a local network the TV programs stored in HDTV and/or SDTV formats, also at different rate from the original one, so that they can be stored in another mirror terminal.
   3) Reproducing inside the terminal itself and transmitting, so that they can be stored in another mirror terminal, through a local network the TV programs stored in HDTV and/or SDTV formats, at a rate equal to the original one;
   4) Receiving through the network different programs or configurations in the same program for the various blocks of the terminal apparatus, storing them and, by way of the control of CNTRL, download said programs or configurations in suitable blocks of the terminal apparatus.
- CNTRL: is the unit that manages all the Control and Management functions of the terminal apparatus among which, the programming of blocks and related sub-blocks, the operative configuration in the program and the alarm collection. It is implemented by means of known microprocessor structures, for instance programmed in the ANSI-C language.

In the case where the store function is used, CNRTL collects information from the corrupt date packets from blocks ATM or DEMUX, interested in interfacing with block MEMINT and the store memory. It communicates with the terminal apparatus that transmits the signal, to which it may ask to retransmit the corrupt data packets, though a low-capacity data line or the ATM network.

CNTRL controls that all functions performed by other blocks, as described above, and highlighted better with reference to the flow charts of Figs. 6, 7, 8 hereinafter described.

With reference to Fig. 6, the control and management function essentially carries out:
A) The selection of the inputs from the network, through BINT 1, BINT 2, BINT 3 (Fig. 1);
B) The selection of the outputs over the network, again through BINT 1, BINT 2, BINT 3;
C) The selection of the terminal apparatus operation mode, according to the possible functions TR 1, TR 2, TR 3, OL 1, OL 2, which, also according to what described in relation to block ATM and DEMUX and with reference to Fig. 7, are:
   TR 1: real-time incoming video signal decoding;
   TR 2: real-time incoming video signal decoding and at the same time storage of the decoded signal into memory MEM (Fig. 1);
   OL 1: only storage of the signal in memory MEM;
   TR 3: read-out of the video signal previously stored in MEM and simultaneous retransmission towards the outside through BINT 1, BINT 2, BINT 3;
   OL 2: retransmission towards the outside only.
D) The selection of the type of decoding to be carried out on the received video signal according to the operation mode of point C) and simultaneous selection of the SDTV and /or HDTV display format, so as to carry out a Display Matrix function which, also according to what described in relation to block HDSDD (Fig. 4) of the video decoder TVDEC and with reference to Fig. 8, performs the following functions:
   F 1: signal decoding and display in SDTV standard format;
   F 2: signal decoding and display in HDTV high definition format
   F 3: decoding of the SDTV received signal, transformation and display in the HDTV format;
   F 4: decoding and display of the received signals in the two formats SDTV and HDTV at the same time;
   F 6: decoding and display of the received SDTV signal, transformation and contemporary display in the HDTV format;
   F 7: decoding and display of the received HDTV signal, transformation and contemporary display in the SDTV format.

In sum, the terminal in question generally allows for:
- supporting different applications with different quality requirements and with remote control;
- combining real-time transmissions with transfers of off-line interactive image files, returning towards other local terminal equipment, allowing a multiterminal interactive management. In this case the ATM network or even Ethemet can be used as channel;
- controlling and correcting the local transmission errors or asking the transmitter to retransmit the corrupt data packets.

It is not deemed it necessary to provide further detailed explanations on the embodiment, since from the above description of the block diagrams and operation flow charts, and on the ground of the knowledge of the applicable standards listed above, a person skilled in the art is able to design the terminal subject of the invention.

## Claims

1. Terminal apparatus for storing and distributing films for a high definition movie distribution service, comprising
- first decoding means (SDH/PDH) for receiving SDH or PDH digital signals and outputting a digital signal in a format compatible with the ATM line signal;
- second decoding means for receiving and decoding an ATM line signal and outputting a signal adapted to the multiplexed MPEG video service;
- third decoding means (DEMUX) for substantially performing the demultiplexing function of the transport multiplexed MPEG signal received at its input and for outputting a demultiplexed video signal;
- fourth decoding means (TVDEC) for receiving the multiplexed video signal from said third decoding means (DEMUX) and performing an MPEG decoding in order to output high definition HDTV and/or standard definition SDTV video signals,
- fifth decoding means (AUDIODEC) for decoding the received signal from said third decoding means (DEMUX) in order to produce an MPEG audio signal;
- a control and management unit (CNTRL) of all the terminal apparatus functions, which, in cooperation with a local memory (MEM) and related interfacing unit (MEMINT):
a) allows the terminal apparatus to operate both as a local decoder for HDTV and SDTV video signals and as an interactive receiver;
b) drives in a bidirectional manner said first, second, third decoding means (SDH/PDH, ATM, DEMUX) in such a way as to be able to receive and/or retransmit video signals in their respective formats, through themselves in cascade and/or from the outside;
c) receives from the outside different video signals in HDTV and/or SDTV formats and store them in said local memory (MEM) also at a different rate from the original one;
d) reproduces and/or retransmits through a local network, so that they can be re-used by another terminal apparatus, said video signals in HDTV and/or SDTV formats, at a rate equal or different from the original one.

2. Terminal apparatus as in claim 1, characterized in that said second decoding means (ATM) further comprises:
- first means (ECATM) for correcting errors on the received signal from said second decoding means (ATM),
- first error protection means (EPATM) for inserting, on the signal coming from said first errors, codes for protection the signal from transmission errors;
- first bidirectional interface (SWATM) that, upon commands coming from said control and management unit (CNTRL), allows an unidirectional interfacing between said first decoding means (SDH/PDH) and said first error correction means (ECATM), and a bidirectional interfacing between its input and said first error correction means (ECATM), first error protection means (EPATM) and local memory (MEM), so as to realize the following interfacing modes:
a1) external or said first decoding means (SDH/PDH), date sources, connected to said first error correction means (ECATM), while said first error protection means (EPATM). date source, connected with the local memory (MEM), date receiver;
a2) local memory, date source, connected with the outside and to said first error correction means (ECATM).

3. Terminal apparatus as in claim 1, characterized in that said third decoding means (DEMUX) further comprise:
- second means (ECDEMUX) for the correction of errors on the received signal from said third decoding means (DEMUX);
- second error protection means (EPDEMUX) that insert, on the signal coming from said second error correction means (ECDEMUX), codes for signal protection from transmission errors;
- second bidirectional interface (SWDEMUX) which, upon commands from said control and management unit (CNTRL), allows an unidirectional interfacing between said second decoding means (ATM) and said second error correction means (ECATM), and a bidirectional interfacing between its input and said second error correction means (ECDEMUX), second error protection means (EPDEMUX) and local memory (MEM), so as to realize the following interfacing modes:
b1) external or said second decoding means (ATM), data sources, connected to said second error correction (ECDEMUX), while said second error protection means (EPDEMUX), data source, connected to the local memory (MEM), data receiver;
b2) local memory, data source, connected to the outside and to said second error correction means (ECATM).

4. Terminal apparatus as in claim 1, characterized in that said fourth decoding means (TVDEC) comprise:
- sixth means (HDSDD) for decoding HDTV and SDTV video signals from said third decoding means (DEMUX), said decoding being applied on one signal at a time or on both;
- means (HDSDP) for post-processing the output signal from said sixth decoding means (HD SDD) which apply noise filtering techniques or format changes and/or a watermarking criptography function, i.e. insertion of an electronic signature for detecting unauthorized reproduction and use of the video signal, and which output a display signal in the SDTV and/or HDTV formats.

5. Terminal apparatus as in any of the preceding claims, characterized in that bidirectional interfaces (BINT1, BINT2, BINT3) are provided for the input/output of transport multiplexed SDH/PDH, ATM video signals, which connect respectively to the inputs of said first, second, third decoding means (SDH/PDH, ATM, DEMUX).

6. Terminal apparatus as in any of the preceding claims, characterized in that said control and management unit (CNTRL) controls all the functions performed by the other blocks so as to essentially perform:
A,B) selection of the inputs/outputs from and over the network, through said bidirectional interface (BINT1, BINT2, BINT3)
C) selection of the terminal apparatus operation modes according to the following possible functions:
- TR1: real-time decoding of the incoming video signal;
- TR2: real-time decoding of the incoming video signal and, at the same time, storing the decoded signal in the local memory (MEM);
- OL1: storing the signal in the local memory (MEM) only;
- TR3: read-out of the video signal previously stored and simultaneous retransmission towards the outside through said bidirectional interfaces (BINT1, BINT2, BINT3);
- OL2: retransmission towards the outside only.
D) selection of the decoding to be carried out on the received video signal according to the mode of operation of point C) and contemporary selection of the SDTV and/or HDT display format, so as to put into effect a display matrix function, that performs the following functions:
- F1: signal decoding and display in SDTV standard format;
- F2: signal decoding and display in HDTV high definition format;
- F3: decoding of the received SDTV signal, transformation and display in the HDTV format;
- F4: decoding of the received HDTV signal, transformation and display in the SDTV format;
- F5: decoding and display of the signals simultaneously received in both SDTV and HDTV formats;
- F6: decoding and display of the received SDTV signal, transformation and display in the HDTV format;
- F7: decoding and display of the received HDTV signal, transformation and simultaneous display in the SDTV format.
